(19) Europäisches Patentamt
European Patent Office
Office européen des brevets

(11) EP 3 378 679 B1

(12) **EUROPEAN PATENT SPECIFICATION**

(45) Date of publication and mention
of the grant of the patent:
**28.07.2021 Bulletin 2021/30**

(51) Int Cl.:
**B60C 11/24** (2006.01)     **B60C 23/04** (2006.01)
**B60W 40/00** (2006.01)

(21) Application number: **18163108.6**

(22) Date of filing: **21.03.2018**

(54) **MODEL BASED TIRE WEAR ESTIMATION SYSTEM AND METHOD**

SYSTEM UND VERFAHREN ZUR MODELLBASIERTEN REIFENVERSCHLEISSSCHÄTZUNG

SYSTÈME ET PROCÉDÉ D'ESTIMATION DE L'USURE DES PNEUS À BASE DE MODÈLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2017 US 201762475353 P**

(43) Date of publication of application:
**26.09.2018 Bulletin 2018/39**

(73) Proprietor: **The Goodyear Tire & Rubber Company
Akron, OH 44316 (US)**

(72) Inventor: **SINGH, Kanwar Bharat
L-7363 Lorentzweiler (LU)**

(74) Representative: **Kutsch, Bernd
Goodyear S.A.
Patent Department
Avenue Gordon Smith
7750 Colmar-Berg (LU)**

(56) References cited:
**EP-A1- 2 813 378        EP-A1- 2 837 510
EP-A1- 2 927 065        DE-A1- 10 058 099
US-A1- 2015 057 877**

## Description

Field of the Invention

The invention relates generally to tire monitoring systems. More particularly, the invention relates to systems that collect tire parameter data. The invention is directed to a system and method for estimating tire wear based upon multiple predictors to provide an accurate and reliable estimation.

Background of the Invention

Tire wear plays an important role in vehicle factors such as safety, reliability, and performance. Tread wear, which refers to the loss of material from the tread of the tire, directly affects such vehicle factors. As a result, it is desirable to monitor and/or measure the amount of tread wear experienced by a tire.

One approach to the monitoring and/or measurement of tread wear has been through the use of wear sensors disposed in the tire tread, which has been referred to a direct method or approach. The direct approach to measuring tire wear from tire mounted sensors has multiple challenges. Placing the sensors in an uncured or "green" tire to then be cured at high temperatures may cause damage to the wear sensors. In addition, sensor durability can prove to be an issue in meeting the millions of cycles requirement for tires. Moreover, wear sensors in a direct measurement approach must be small enough not to cause any uniformity problems as the tire rotates at high speeds. Finally, wear sensors can be costly and add significantly to the cost of the tire.

Due to such challenges, alternative approaches were developed, which involved prediction of tread wear over the life of the tire. These alternative approaches have experienced certain disadvantages in the prior art due to a lack of optimum prediction techniques, which in turn reduces the accuracy and/or reliability of the tread wear predictions.

As a result, there is a need in the art for a system and method that accurately and reliably estimates tire wear.

EP-A-2 927 065 describes a system and a method in accordance with the preamble of claims 1 and 12 respectively.

US-A-2015/057877 describes a tire wear state estimation based on the wheel position.

EP-A-2 813 378 describes a further tire wear state estimation system and method.

Summary of the Invention

The invention relates to a system in accordance with claim 1 and to a method in accordance with claim 12.

Dependent claims refer to preferred embodiments of the invention.

According to an aspect of an exemplary embodiment of the invention, a tire wear estimation system is provided. The system includes at least one tire that supports a vehicle. At least one sensor is affixed to the tire to generate a first predictor. A lookup table or a database stores data for a second predictor. One of the predictors includes at least one vehicle effect. A model receives the predictors and generates an estimated wear rate for the at least one tire.

According to another aspect of an exemplary embodiment of the invention, a method for estimating the wear of a tire supporting a vehicle is provided. The method includes providing at least one sensor that is affixed to the tire. A first predictor is generated from the at least one sensor. At least one of a lookup table and a database is provided to store data. A second predictor is generated from the lookup table or the database. One of the predictors includes at least one vehicle effect. The predictors are input into a model, and an estimated wear rate for the tire is generated with the model. The estimated wear rate is communicated to a vehicle operating system.

Brief Description of the Drawings

The invention will be described by way of example and with reference to the accompanying drawings, in which:

Figure 1 is a perspective view of a vehicle and sensor-equipped tire;
Figure 2 is a graphical representation showing the effect of wheel position on tread wear;
Figure 3 is a schematic diagram of vehicle drivetrains and wheel positions;
Figure 4 is a boxplot showing the relationship of wheel position and tread wear for different drivetrain types;
Figure 5 is a boxplot showing a comparison of tread wear for driving routes of different severity levels;
Figure 6 is a graphical representation showing the relationship between tread wear and tire force severity;
Figure 7 is a graphical representation showing the correlation between tread wear and tire dimensions;
Figure 8 is a boxplot showing the relationship between tread wear and weather effects;
Figure 9 is a boxplot showing the relationship between tread wear and tread compound characteristics;
Figure 10 is a schematic representation of the predictors used in a first exemplary embodiment of the tire wear estimation system and method of the present invention;

Figure 11 is a graphical representation of the accuracy of an exemplary embodiment of the tire wear estimation system and method of the present invention.

Figure 12 is a schematic representation of a second exemplary embodiment of the tire wear estimation system and method of the present invention;

Figure 13 is a schematic representation of integration of data in the second exemplary embodiment of the tire wear estimation system and method of the present invention; and

Figure 14 is a schematic representation of the implementation of the first and second exemplary embodiments of the tire wear estimation system and method of the present invention.

Similar numerals refer to similar parts throughout the drawings.

Definitions

"ANN" or "Artificial Neural Network" is an adaptive tool for non-linear statistical data modeling that changes its structure based on external or internal information that flows through a network during a learning phase. ANN neural networks are non-linear statistical data modeling tools used to model complex relationships between inputs and outputs or to find patterns in data.

"Axial" and "axially" means lines or directions that are parallel to the axis of rotation of the tire.

"CAN bus" is an abbreviation for controller area network.

"Circumferential" means lines or directions extending along the perimeter of the surface of the annular tread perpendicular to the axial direction.

"Footprint" means the contact patch or area of contact created by the tire tread with a flat surface as the tire rotates or rolls.

"Kalman Filter" is a set of mathematical equations that implement a predictor-corrector type estimator that is optimal in the sense that it minimizes the estimated error covariance when some presumed conditions are met.

"Lateral" means an axial direction.

"Luenberger Observer" is a state observer or estimation model. A "state observer" is a system that provide an estimate of the internal state of a given real system, from measurements of the input and output of the real system. It is typically computer-implemented, and provides the basis of many practical applications.

"MSE" is an abbreviation for mean square error, the error between and a measured signal and an estimated signal which the Kalman filter minimizes.

"Net contact area" means the total area of ground contacting tread elements between the lateral edges around the entire circumference of the tread divided by the gross area of the entire tread between the lateral edges.

"PSD" is power spectral density (a technical name synonymous with FFT (fast fourier transform).

"Radial" and "radially" means directions radially toward or away from the axis of rotation of the tire.

Detailed Description of Example Embodiments of the Invention

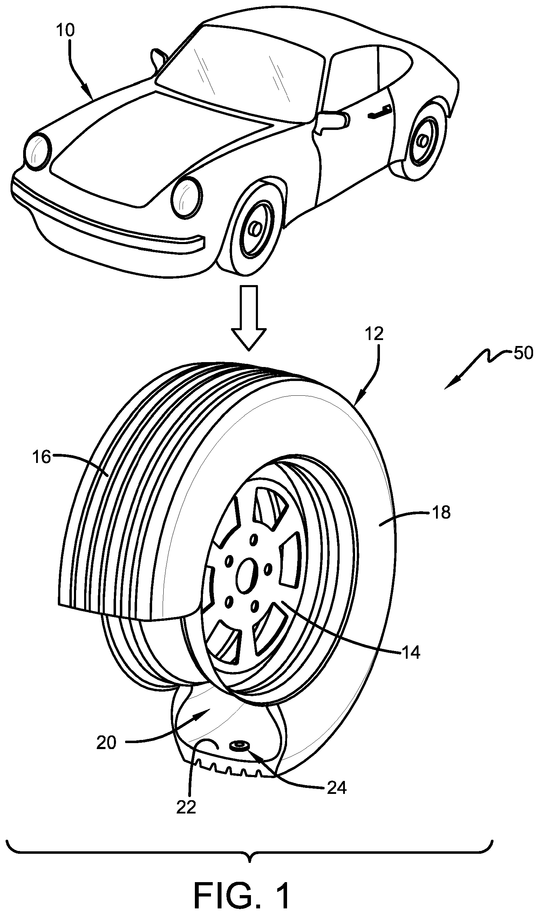

A first exemplary embodiment of the tire wear estimation system of the present invention is indicated at 50 in Figures 1 through 11. With particular reference to Figure 1, the system 50 estimates the tread wear on each tire 12 supporting a vehicle 10. While the vehicle 10 is depicted as a passenger car, the invention is not to be so restricted. The principles of the invention find application in other vehicle categories such as commercial trucks in which vehicles may be supported by more or fewer tires.

The tires 12 are of conventional construction, and are mounted on a wheel 14. Each tire includes a pair of sidewalls 18 that extend to a circumferential tread 16, which wears from road abrasion with age. Each tire 12 preferably is equipped with a sensor or transducer 24 that is mounted to the tire for the purpose of detecting certain real-time tire parameters, such as tire pressure and temperature. The sensor 24 preferably also includes a tire identification (tire ID) for each specific tire 12, and transmits measured parameters and tire ID data to a remote processor, such as a processor integrated into the vehicle CAN bus, for analysis. The sensor 24 may be a tire pressure monitoring (TPMS) module or sensor, and is of a type commercially available. The sensor 24 preferably is affixed to an inner liner 22 of the tire 12 by suitable means such as adhesive. The sensor 24 may be of any known configuration, such as piezoelectric sensors that detect a pressure within a tire cavity 20.

The tire wear estimation system 50 and accompanying method attempts to overcome the challenges posed by prior art methods that measure the tire wear state through direct sensor measurements. As such, the subject system and method is referred herein as an "indirect" wear sensing system and method that estimates wear rate. The prior art direct approach to measuring tire wear state from tire mounted sensors has multiple challenges, which are described above. The tire wear estimation system 50 and accompanying method utilize an indirect approach, and avoid the problems attendant use of tire wear sensors mounted directly to the tire tread 16. The system 50 instead utilizes a tire wear estimation model that receives multiple input parameters to generate a high-accuracy estimation of the rate of tire wear.

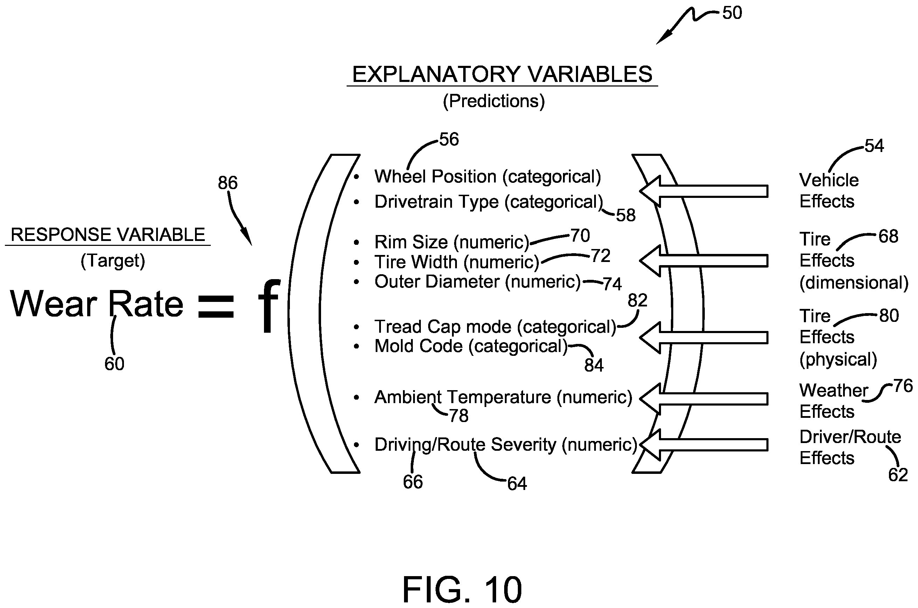

Aspects of the tire wear estimation system 50 preferably are executed on a processor that is accessible through the vehicle CAN bus, which enables input of data from the sensor 24, as well as input of data from a lookup table or a database that is stored in a suitable storage medium and is in electronic communication with the processor. As shown in Figure 10, the tire wear estimation system 50 employs a wide range of predictors 52 that are input to provide an estimation of tire wear or the tire wear rate 60. It is to be noted that, for the purpose of convenience, the term "tread wear" may be used interchangeably herein with the term "tire wear".

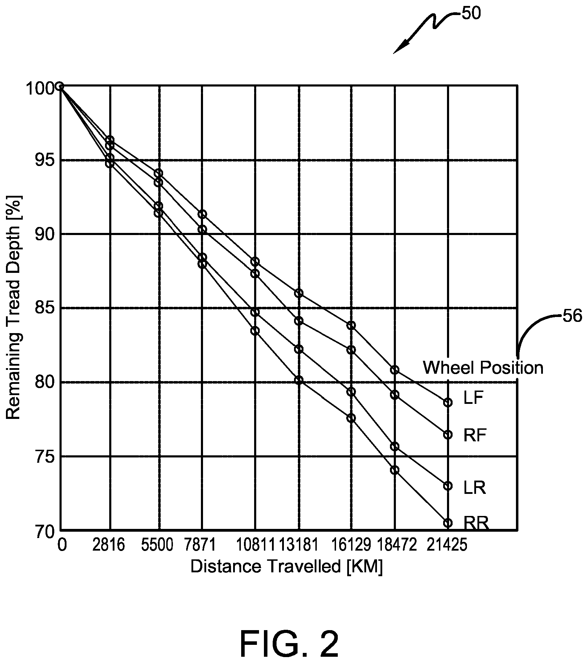

A first one of the predictors 52 for the tire wear estimation system 50 includes vehicle effects 54. More particularly, one vehicle effect 54 is a wheel position 56 on the vehicle 10. The vehicle 10 includes four different wheel positions 56: driver side or left side front, passenger side or right side front, driver side or left side rear, and passenger side or right side rear. The tire 12 at each wheel position 56 experiences a different wear pattern, which leads to different tread wear. For example, as shown in Figure 2, each wheel position 56 of left front (LF), right front (RF), left rear (LR) and right rear (RR) undergoes different tread wear, as indicated by the tread depth, as the vehicle 10 is driven. Therefore, the wheel position 56 is one of the predictors 52 to be input into the tire wear estimation system 50. The wheel position 56 may be sensed by the sensor 24, may be included in the tire ID data, and/or may be stored in the above-described storage medium.

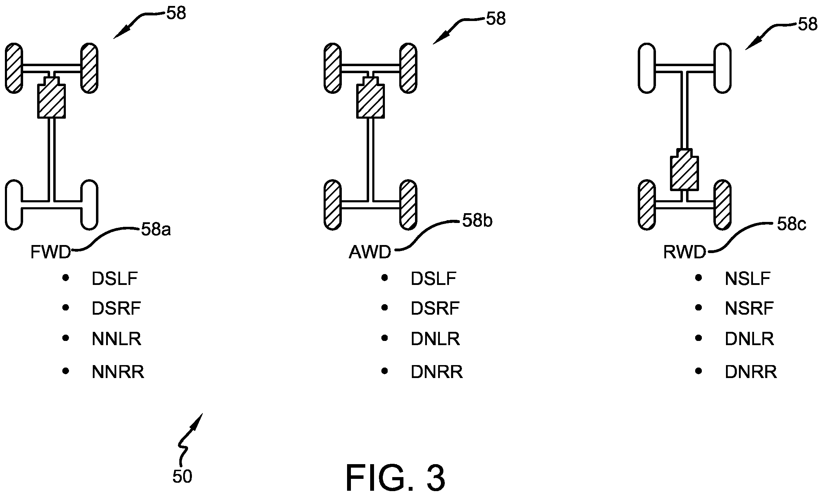

Referring to Figure 10, another vehicle effect 54 is the vehicle drivetrain type 58. More particularly, the tread wear for the tire 12 at each wheel position 56 becomes more significant when taking the drivetrain type 58 into account. As shown in Figure 3, there are three different drivetrain types 58: front wheel drive 58a; all wheel drive 58b; and rear wheel drive 58c. Each drivetrain type 58 affects tire wear. In front wheel drive 58a, the front steering axle is driven, so both front tires are driven and steered, while rear tires are not driven or steered. In all wheel drive 58b, the front and rear axles are driven, so the front tires are driven and steered, while the rear tires are driven but not steered. In rear wheel drive 58c, the rear axle driven, so front the tires are steered but not driven, while the rear tires are driven and not steered.

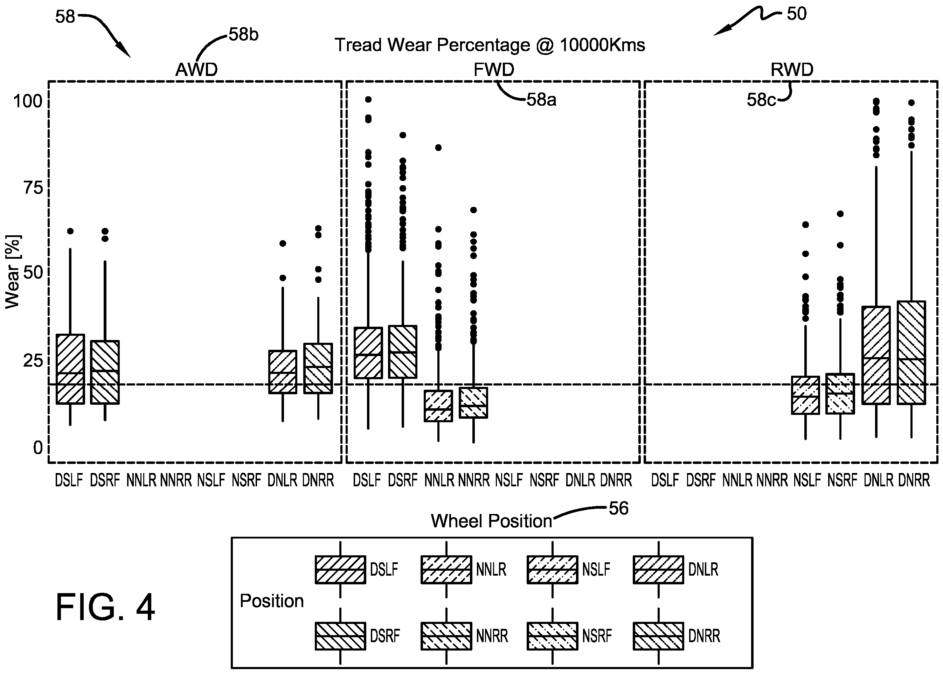

Turning to Figure 4, a boxplot shows the relationship of the wheel position 56 and the tread wear for different drivetrain types 58. For an all wheel drive drivetrain 58b, there are similar wear rates for tires 12 at all four wheel positions 56. For front wheel drive drivetrains 58a, the wear rates of the front tires are about twice that of the rear tires. For rear wheel drive drivetrains 58c, the wear rates of the rear tires are about 1.5 times that of the front tires. Therefore, the drivetrain type 58 has a significant impact on tire wear, and is one of the predictors 52 to be input into the tire wear estimation system 50. The drivetrain type 58 may be sensed by the sensor 24, may be included in the tire ID data, and/or may be stored in the above-described storage medium.

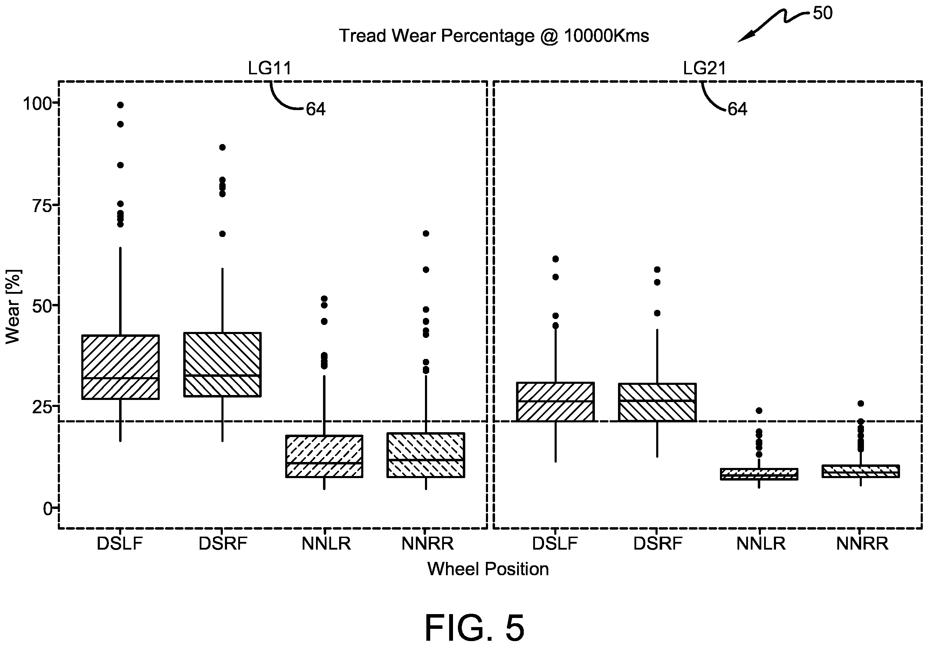

As shown in Figure 10, a second one of the predictors 52 for the tire wear estimation system 50 includes route and driver effects 62. The route and driver effects 62 in turn include route severity 64 and driver severity 66. The route severity 64 takes into account the amount of turns, starts and stops in a route driven by the vehicle 10. A route that includes more turns, more starts and/or more stops than another route is considered to be more severe, and will thus have a higher route severity 64. Figure 5 is a boxplot showing a comparison of tread wear for driving routes having two different severity levels. Specifically, route LG11 has a route severity 64 that is higher than route LG21. Because route LG11 has a higher route severity 64, and is thus a more severe route, it results in more wear on the tires 12.

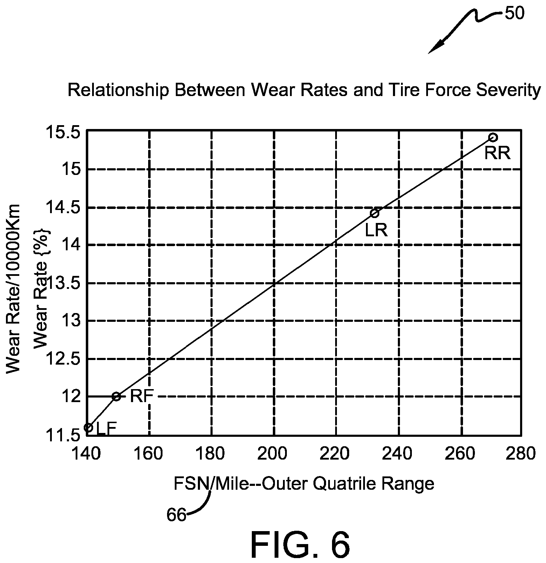

The driver severity 66 takes into account the driving style of the driver of the vehicle 10. More aggressive driving, such as aggressive starts and stops, generates more frictional energy, which increases tire force and increases tread wear. As shown in Figure 6, the driver severity 66 may be expressed as the force severity on the tire 10. Calculation of the force severity on the tire 10 may be done through a variety of techniques. One exemplary technique is described in US-B-9,873,293. Figure 6 is a graphical representation showing the relationship between tread wear and tire force severity, which indicates that a higher driver severity 66 creates more tire wear. The route and driver effects 62 may be sensed by the sensor 24, may be included in the tire ID data, and/or may be stored in the above-described storage medium.

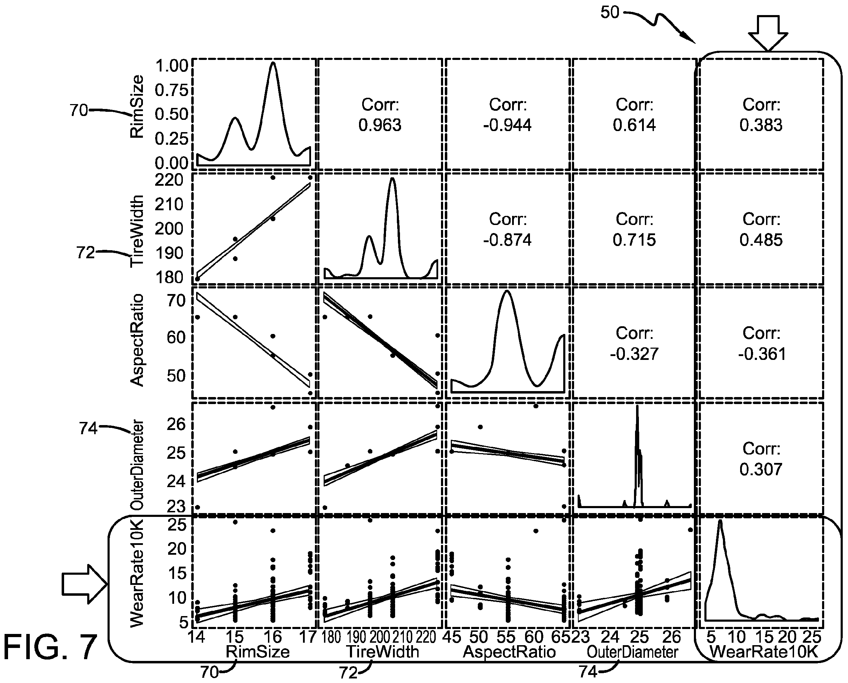

Returning to Figure 10, a third one of the predictors 52 for the tire wear estimation system 50 includes dimensional tire effects 68. The dimensional tire effects 68 in turn include the tire rim size 70, the tire width 72, and the tire outer diameter 74. Figure 7 provides a graphical representation showing the correlation between tread wear and dimensional tire effects 68, including the tire rim size 70, the tire width 72, and the tire outer diameter 74. This correlation establishes that tire size affects wear rate, as larger tires tend to wear more. Therefore, the dimensional tire effects 68 comprise one of the predictors 52 to be input into the tire wear estimation system 50. The dimensional tire effects 68 may be sensed by the sensor 24, may be included in the tire ID data, and/or may be stored in the above-described storage medium.

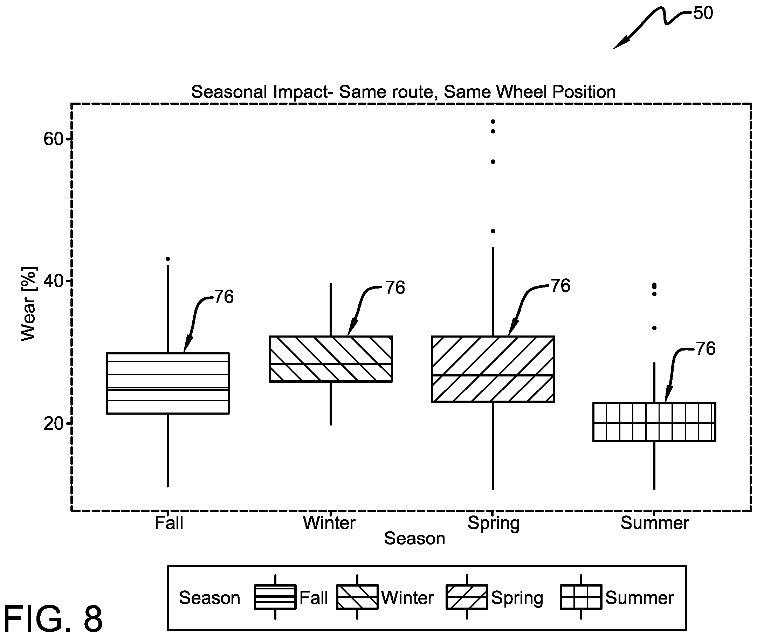

A fourth one of the predictors 52 for the tire wear estimation system 50, as shown in Figure 10, includes weather effects 76. Figure 8 is a boxplot showing the relationship between tread wear and weather effects 76. From the boxplot, it is evident that higher wear rates occur in seasons with lower temperatures. Therefore, a convenient indicator of weather effects 76 is an ambient temperature 78. Higher wear rates thus occur at lower ambient temperatures 78. The ambient temperature 78 preferably is sensed by the sensor 24 for input into the tire wear estimation system 50.

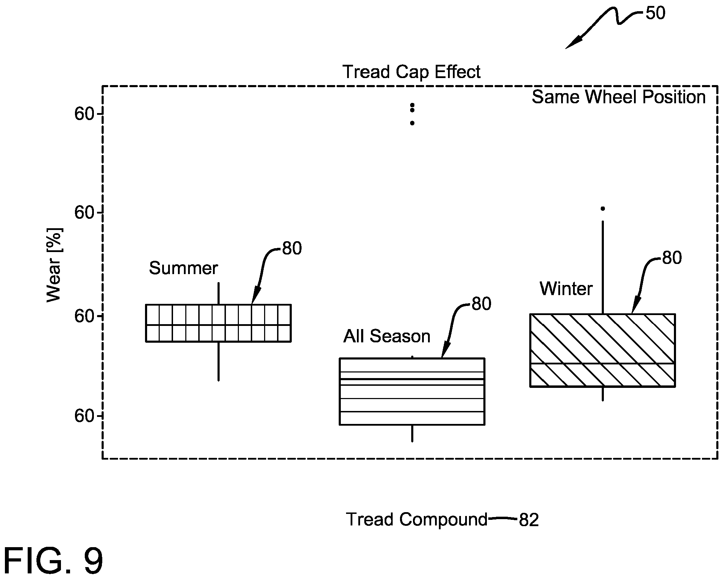

With reference again to Figure 10, a fifth one of the predictors 52 for the tire wear estimation system 50 includes physical tire effects 80. The physical tire effects 80 in turn include the compound used for the tread 16, which may be indicated by the treadcap code 82, and the tread structure, which may be indicated by the tire mold code 84. For example, Figure 9 is a boxplot showing the relationship between tread wear and different types of tread compounds 82. As shown by Figure 9, the characteristics of a particular tread compound 82 affect wear, as do the characteristics of a particular tread structure 84. Therefore, physical tire effects 80 comprise one of the predictors 52 to be input into the tire wear estimation system 50. The physical tire effects 80 may be included in the tire ID data and/or may be stored in the above-described storage medium.

Other predictors 52 may optionally be employed in the tire wear estimation system 50. For example, tire pressure as sensed by the sensor 24 may be used as a predictor 52, as low pressure, known as under-inflation, and excessive pressure, known as over-inflation, may impact the wear rate of the tire 12. The roughness of the road driven by the vehicle 10 may impact tire wear, and may thus be employed as a predictor 52 and sensed by the sensor 24 and/or stored in the above-described storage medium. Also, scrubbing of the tires 12, which is a dragging of a tire in a lateral direction due to short turns or parking lot maneuvers, may accelerate tire wear, and may be sensed by the sensor 24 and used as a predictor 52.

Referring now to Figure 10, all of the predictors 52 are input into a model 86 to generate the estimated wear rate 60 for a given tire 12. The tire wear estimation system 50 generates the estimated wear rate 60 through model fitting, and any appropriate model may be selected. For example, a Multiple Regression Linear (MLR) Model may be used. By way of background, linear regression is a simple approach to supervised learning. It assumes that the dependence of Y on X1; X2; ... Xp is linear. In this example, the model is:

$$Y = \beta_0 + \beta_1 X_1 + \beta_2 X_2 + \cdots + \beta_p X_p + \epsilon,$$

We interpret $\beta_j$ as the *average* effect on $Y$ of a one unit increase in $X_i$, *holding all other predictors fixed.*

The model fitting is done using stepwise regression, in turn using a forward selection technique, with p-value criteria. Regression subset selection is performed using a forward stepwise selection technique. In this technique, one starts with a model having no predictors, that is, the model is built with only the intercept. The independent variable with the lowest p-value or the highest F value is chosen, and the remaining variables are added one at a time to the existing model. The variable with the lowest significant p-value is selected. This step is repeated until the lowest p-value is greater than 0.05. To summarize, the procedure is to start with the most basic model, $Y = \beta_0$ and add one predictor at a time until there is no statistically significant difference between adding one more predictor.

Of course, any suitable modeling technique known to those skilled in the art may be used without affecting the concept or operation of the invention. Once the estimated wear rate 60 is generated, it is communicated from the tire wear estimation system 50 to the vehicle operating systems, such as braking and stability control systems, through the vehicle CAN bus.

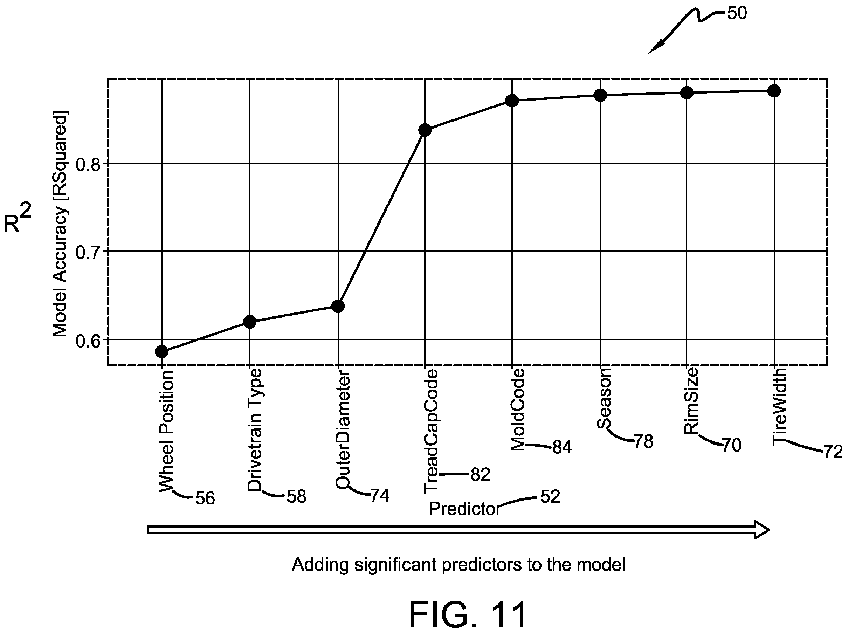

Turning to Figure 11, a graphical representation of the accuracy of an exemplary embodiment of the tire wear estimation system 50 of the present invention is shown. The use of the model 86 with multiple input predictors 52 achieves over 85% accuracy in wear estimation, which indicates an accurate and reliable estimate of the tire wear rate 60. In this manner, the tire wear estimation system 50 of the present invention employs multiple predictors to accurately and reliably measure tire wear.

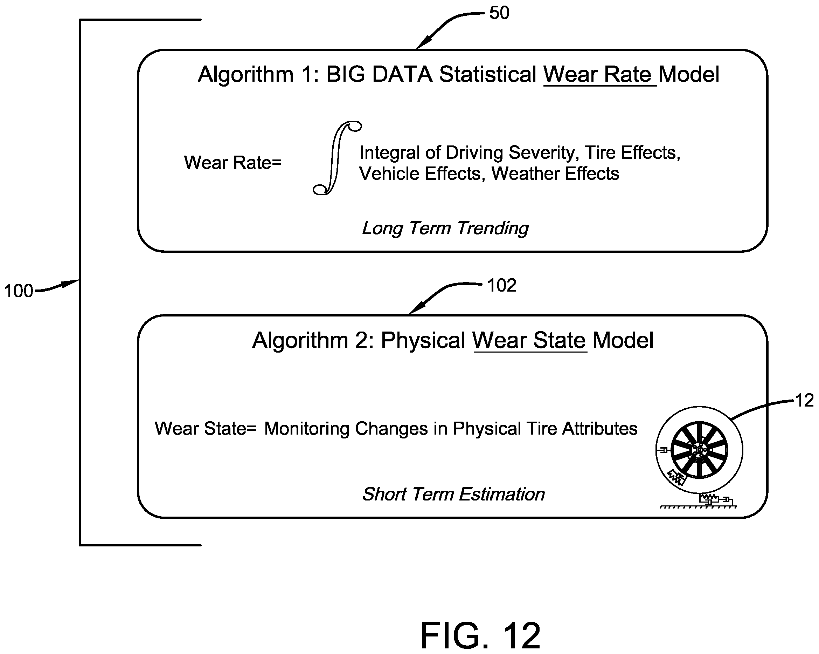

A second exemplary embodiment of the tire wear estimation system of the present invention is indicated at 100 in Figures 12 through 14. With particular reference to Figure 12, the second embodiment of the tire wear estimation system 100 incorporates the first embodiment of the wear estimation system 50 as described above, and adds certain real-time predictors 102. More particularly, the first embodiment of the wear estimation system 50 is an indirect wear sensing system and method that utilizes a tire wear estimation model which receives multiple input parameters or predictors 52 to generate a high-accuracy estimation of the rate of tire wear. The second embodiment of the wear estimation system 100 adds predictors 102 that include real-time measurements of sensed conditions of the tire 12.

Such real-time measurements include changes in the physical attributes or characteristics of the tire, such as the stiffness of the tread 16. Real-time measurement and modeling of such physical attributes or characteristics may be accomplished through techniques known to those skilled in the art.

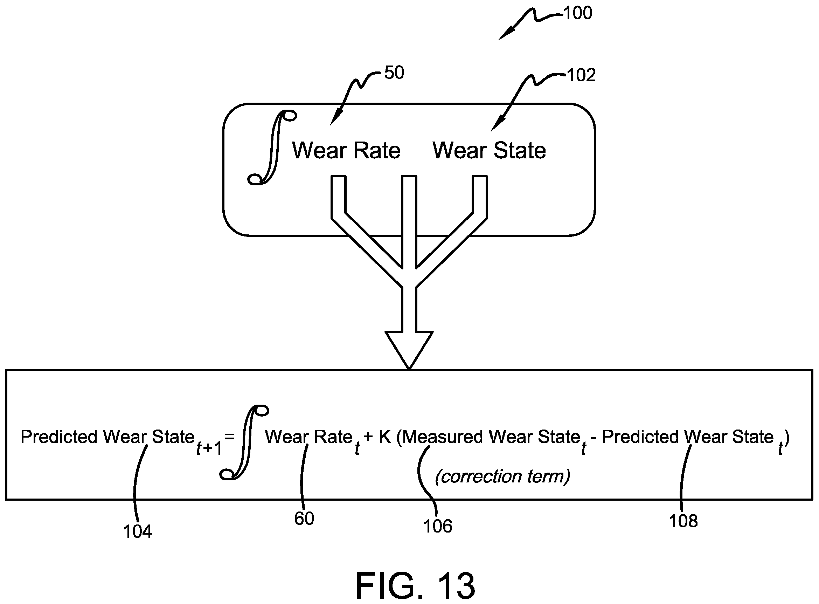

As shown in Figure 13, when the first embodiment the first embodiment of the wear estimation system 50 is integrated with the real-time predictors 102, a predicted wear state 104 is calculated. The predicted wear state 104 includes the above-described wear rate 60 with the addition of corrected real-time predictors, which include the measured wear state parameters 106 with filter adjustments 108. Specifically, the filter adjustments 108 subtract or remove data that may generate "noise" or inaccurate values.

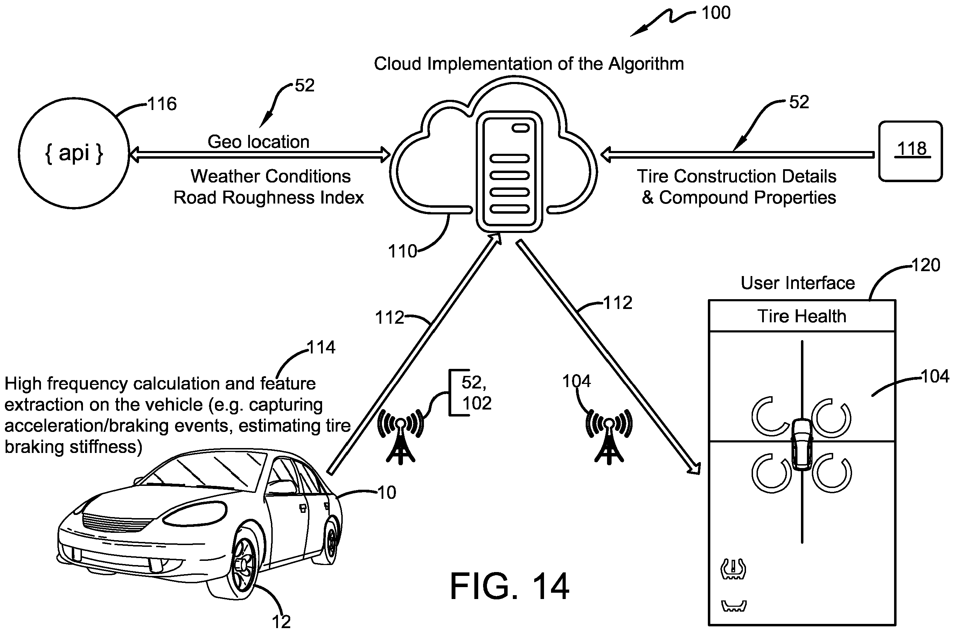

Turning to Figure 14, the second embodiment of the wear estimation system 100 may be implemented using a cloud-based server 110. More particularly, sensors on the tire 12 and/or the vehicle 10 are a first source 114 that measure real-time predictors 102, which are wirelessly transmitted by means known in the art 112 to the server 110. The tire sensor 24 may also transmit certain selected predictors 52, such as the ambient temperature 78 and tire identification data, to the server 110. Other selected predictors 52 for estimation of the wear rate 60, such as location, weather, and road condition data, may be transmitted from a second source 116 to the server 110. Still other selected predictors 52 for estimation of the wear rate 60, such as tread compound data 82 and tread structure data 84, may be sent from a third source 118 to the server 110. On the server 110, the predictors 52 are input into the model 86 for estimation of the wear rate 60, which is integrated with the real-time predictors 102 to yield the predicted wear state 104. The predicted wear state 104 is wirelessly transmitted by means known in the art 112 to a device 120 for display to a user or a technician, such as a smartphone.

In this manner, the second embodiment of the wear estimation system 100 provides additional refinement and accuracy, as it adds the predictors 102 of real-time measurements of sensed conditions of the tire 12 to the estimation of the wear rate 60 that is generated by the first embodiment of the wear estimation system 50.

The present invention also includes a method of estimating the wear rate of a tire 12. The method includes steps in accordance with the description that is presented above and shown in Figures 1 through 14.

It is to be understood that the structure and method of the above-described tire wear estimation system may be altered or rearranged, or components or steps known to those skilled in the art omitted or added, without affecting the overall concept or operation of the invention.

**Claims**

1. A tire wear estimation system (50, 100) comprising:

   at least one tire (12) supporting a vehicle (10);
   at least one sensor affixed to the tire (12) to generate a first predictor (52, 102);
   at least one of a lookup table and a database storing data for a second predictor (52, 102), wherein at least one of the first and second predictors includes at least one vehicle effect (54); and
   a model configured for receiving the predictors (52, 102) and generating an estimated wear rate (60) for the at least one tire (12),
   **characterized in that** the system (50, 100) further comprises an additional predictor (52, 102) that includes at least one of route severity (64) and driver severity (66), or an additional predictor (52, 102) that includes at least one of a compound identification (82) for the at least one tire (12) and a tread structure identification (84) for the at least one tire (12).

2. The tire wear estimation system of claim 1, wherein the model is configured to generate the estimated wear rate (60) on a processor that is accessible through a vehicle CAN bus.

3. The tire wear estimation system of claim 1 or 2, further comprising means for communicating the estimated wear rate (60) to a vehicle operating system.

4. The tire wear estimation system of at least one of the previous claims, wherein the first predictor (52, 102) includes weather effects (76).

5. The tire wear estimation system of at least one of the previous claims, wherein the first predictor (52, 102) is an ambient temperature (78).

6. The tire wear estimation system of at least one of the previous claims, wherein the at least one vehicle effect (54) includes at least one of a wheel position (56) of the at least one tire (12) and a drivetrain type (58) of the vehicle (10).

7. The tire wear estimation system of at least one of the previous claims, further comprising an additional predictor (52, 102) that includes at least one of a rim size (70) of the at least one tire (12), a width (72) of the at least one tire (12), and an outer diameter (74) of the at least one tire (12).

8. The tire wear estimation system of claim 1, wherein the compound identification (82) is expressed in a tread cap code and/or wherein the tread structure identification (84) is expressed in a mold code.

9. The tire wear estimation system of at least one of the previous claims, further comprising additional predictors (52, 102) that include at least one of a pressure of the at least one tire (12), a road roughness, and tire scrubbing incidents.

10. The tire wear estimation system of at least one of the previous claims, wherein the model includes a multiple regression linear model.

11. The tire wear estimation system of at least one of the previous claims, further comprising an additional predictor (52, 102) that includes a real-time measurement of a sensed physical condition of the at least one tire (12), and the model integrates the real-time measurement with the estimated wear rate (60).

12. A method for estimating the wear of a tire (12) supporting a vehicle (10), the method comprising the steps of:

    providing at least one sensor affixed to the tire (12);
    generating a first predictor (52, 102) from the at least one sensor;
    providing at least one of a lookup table and a database storing data;
    generating a second predictor (52, 102) from the at least one of a lookup table and a database, wherein one of the predictors includes at least one vehicle effect (54);
    inputting the predictors (52, 102) into a model;
    generating an estimated wear rate (60) for the tire (12) with the model; and
    communicating the estimated wear rate (60) to a vehicle operating system,
    **characterized in that** the method further comprises providing an additional predictor (52, 102) that includes at least one of route severity (64) and driver severity (66), or an additional predictor (52, 102) that includes at least one of a compound identification (82) for the at least one tire (12) and a tread structure identification (84) for the at least one tire (12).

13. The method for estimating the wear of a tire of claim 12, further comprising sensing a real-time measurement of a physical condition of the tire (12) and integrating the estimated wear rate (60) with the sensed physical condition.


**Patentansprüche**

1. Reifenverschleißschätzsystem (50, 100), umfassend:

    wenigstens einen Reifen (12), der ein Fahrzeug (10) trägt;
    wenigstens einen Sensor, der an dem Reifen (12) befestigt ist, um einen ersten Prädiktor (52, 102) zu erzeugen;
    eine Nachschlagetabelle und/oder eine Datenbank, die Daten für einen zweiten Prädiktor (52, 102) speichert, wobei der erste und/oder der zweite Prädiktor wenigstens einen Fahrzeugeffekt (54) einschließt; und
    ein Modell, das zum Empfangen der Prädiktoren (52, 102) und zum Erzeugen einer geschätzten Verschleißrate (60) für den wenigstens einen Reifen (12) konfiguriert ist,
    **dadurch gekennzeichnet, dass** das System (50, 100) ferner einen zusätzlichen Prädiktor (52, 102), der einen Streckenschweregrad (64) und/oder einen Fahrerschweregrad (66) einschließt, oder einen zusätzlichen Prädiktor (52, 102) umfasst, der eine Verbindungsidentifikation (82) für den wenigstens einen Reifen (12) und/oder eine Laufflächenstrukturidentifikation (84) für den wenigstens einen Reifen (12) einschließt.

2. Reifenverschleißschätzsystem nach Anspruch 1, wobei das Modell konfiguriert ist, um die geschätzte Verschleißrate (60) auf einem Prozessor zu erzeugen, der durch einen Fahrzeug-CAN-Bus zugänglich ist.

3. Reifenverschleißschätzsystem nach Anspruch 1 oder 2, ferner umfassend Mittel zum Übermitteln der geschätzten Verschleißrate (60) an ein Fahrzeugbetriebssystem.

4. Reifenverschleißschätzsystem nach wenigstens einem der vorhergehenden Ansprüche, wobei der erste Prädiktor (52, 102) Wettereffekte (76) einschließt.

5. Reifenverschleißschätzsystem nach wenigstens einem der vorhergehenden Ansprüche, wobei der erste Prädiktor (52, 102) eine Umgebungstemperatur (78) ist.

6. Reifenverschleißschätzsystem nach wenigstens einem der vorhergehenden Ansprüche, wobei der wenigstens eine Fahrzeugeffekt (54) eine Radposition (56) des wenigstens einen Reifens (12) und/oder eine Antriebsstrangart (58) des Fahrzeugs (10) einschließt.

7. Reifenverschleißschätzsystem nach wenigstens einem der vorhergehenden Ansprüche, ferner umfassend einen zusätzlichen Prädiktor (52, 102), der eine Felgengröße (70) des wenigstens einen Reifens (12), eine Breite (72) des wenigstens einen Reifens (12) und/oder einen Außendurchmesser (74) des wenigstens einen Reifens (12) einschließt.

8. Reifenverschleißschätzsystem nach Anspruch 1, wobei die Verbindungsidentifikation (82) in einem Laufflächenkappencode ausgedrückt ist und/oder wobei die Laufflächenstrukturidentifikation (84) in einem Formcode ausgedrückt ist.

9. Reifenverschleißschätzsystem nach wenigstens einem der vorhergehenden Ansprüche, ferner umfassend zusätzliche Prädiktoren (52, 102), die einen Druck des wenigstens einen Reifens (12), eine Straßenrauheit und/oder Reifenscheuervorfälle einschließen.

10. Reifenverschleißschätzsystem nach wenigstens einem der vorhergehenden Ansprüche, wobei das Modell ein lineares Modell mit multipler Regression einschließt.

11. Reifenverschleißschätzsystem nach wenigstens einem der vorhergehenden Ansprüche, ferner umfassend einen zusätzlichen Prädiktor (52, 102), der eine Echtzeitmessung eines erfassten physikalischen Zustands des wenigstens einen Reifens (12) einschließt, und wobei das Modell die Echtzeitmessung mit der geschätzten Verschleißrate (60) integriert.

12. Verfahren zum Schätzen des Verschleißes eines Reifens (12), der ein Fahrzeug (10) trägt, wobei das Verfahren die folgenden Schritte umfasst:

> Bereitstellen wenigstens eines Sensors, der an dem Reifen (12) befestigt ist;
> Erzeugen eines ersten Prädiktors (52, 102) aus dem wenigstens einen Sensor;
> Bereitstellen einer Nachschlagetabelle und/oder einer Datenbank, die Daten speichert;
> Erzeugen eines zweiten Prädiktors (52, 102) aus einer Nachschlagetabelle und/oder einer Datenbank, wobei einer der Prädiktoren wenigstens einen Fahrzeugeffekt (54) einschließt;
> Eingeben der Prädiktoren (52, 102) in ein Modell;
> Erzeugen einer geschätzten Verschleißrate (60) für den Reifen (12) mit dem Modell; und
> Übermitteln der geschätzten Verschleißrate (60) an ein Fahrzeugbetriebssystem,
> **dadurch gekennzeichnet, dass** das Verfahren ferner das Bereitstellen eines zusätzlichen Prädiktors (52, 102), der den Streckenschweregrad (64) und/oder den Fahrerschweregrad (66) einschließt, oder eines zusätzlichen Prädiktors (52, 102) umfasst, der eine Verbindungsidentifikation (82) für den wenigstens einen Reifen (12) und/oder eine Laufflächenstrukturidentifikation (84) für den wenigstens einen Reifen (12) einschließt.

13. Verfahren zum Schätzen des Verschleißes eines Reifens nach Anspruch 12, ferner umfassend ein Erfassen einer Echtzeitmessung eines physikalischen Zustands des Reifens (12) und ein Integrieren der geschätzten Verschleißrate (60) mit dem erfassten physikalischen Zustand.

## Revendications

1. Système destiné à l'estimation de l'usure d'un bandage pneumatique (50, 100) qui comprend :

> au moins un bandage pneumatique (12) qui supporte un véhicule (10) ;
> au moins un capteur qui est fixé au bandage pneumatique (12) dans le but de générer un premier indicateur (52, 102) ;
> au moins un élément qui est choisi parmi une table de référence et une base de données qui met en mémoire des données pour un deuxième indicateur (52, 102) ; dans lequel au moins un indicateur qui est choisi parmi le premier indicateur et le deuxième indicateur englobe au moins un effet du véhicule (54) ; et
> un modèle qui est configuré pour la réception des indicateurs (52, 102) et pour la génération d'un taux d'usure (60) qui a été estimé pour ledit au moins un bandage pneumatique (12) ;
> **caractérisé en ce que** le système (50, 100) comprend en outre un indicateur supplémentaire (52, 102) qui englobe au moins un élément qui est choisi parmi la rigueur de la route (64) et la rudesse du conducteur (66), ou un indicateur supplémentaire (52, 102) qui englobe au moins un élément qui est choisi parmi une identification (82) d'un composé pour ledit au moins un bandage pneumatique (12) et une identification (84) de la structure de la bande de roulement pour ledit au moins un bandage pneumatique (12).

2.  Système destiné à l'estimation de l'usure d'un bandage pneumatique selon la revendication 1, dans lequel le modèle est configuré pour générer le taux d'usure (60) qui a été estimé sur un processeur auquel on peut accéder par l'intermédiaire d'un bus CAN du véhicule.

3.  Système destiné à l'estimation de l'usure d'un bandage pneumatique selon la revendication 1 ou 2, qui comprend en outre un moyen pour communiquer le taux d'usure (60) qui a été estimé à un système de commande du véhicule.

4.  Système destiné à l'estimation de l'usure d'un bandage pneumatique selon au moins une des revendications précédentes, dans lequel le premier indicateur (52, 102) englobe des effets météorologiques (76).

5.  Système destiné à l'estimation de l'usure d'un bandage pneumatique selon au moins une des revendications précédentes, dans lequel le premier indicateur (52, 102) représente une température ambiante (78).

6.  Système destiné à l'estimation de l'usure d'un bandage pneumatique selon au moins une des revendications précédentes, dans lequel ledit au moins un effet du véhicule (54) englobe au moins un effet qui est choisi parmi une position de roue (56) dudit au moins un bandage pneumatique (12) et un type de chaîne de transmission (58) du véhicule (10).

7.  Système destiné à l'estimation de l'usure d'un bandage pneumatique selon au moins une des revendications précédentes, qui comprend en outre un indicateur supplémentaire (52, 102) qui englobe au moins un indicateur qui est choisi parmi une dimension de jante (70) dudit au moins un bandage pneumatique (12), une largeur (72) dudit au moins un bandage pneumatique (12) et un diamètre externe (74) dudit au moins un bandage pneumatique (12).

8.  Système destiné à l'estimation de l'usure d'un bandage pneumatique selon la revendication 1, dans lequel l'identification (82) d'un composé est exprimée dans un code de la chape de la bande de roulement et/ou dans lequel l'identification (84) de la structure de la bande de roulement est exprimée dans un code de moule.

9.  Système destiné à l'estimation de l'usure d'un bandage pneumatique selon au moins une des revendications précédentes, qui comprend en outre des indicateurs supplémentaires (52, 102) qui englobent au moins un indicateur qui est choisi parmi une pression dudit au moins un bandage pneumatique (12), des aspérités de la route et des incidents sous la forme de frictions du bandage pneumatique.

10. Système destiné à l'estimation de l'usure d'un bandage pneumatique selon au moins une des revendications précédentes, dans lequel le modèle englobe un modèle linéaire du type à régression multiple.

11. Système destiné à l'estimation de l'usure d'un bandage pneumatique selon au moins une des revendications précédentes, qui comprend en outre un indicateur supplémentaire (52, 102) qui englobe une mesure en temps réel d'un état physique dudit au moins un bandage pneumatique (12), qui a été détecté, et le modèle intègre la mesure en temps réel au taux d'usure (60) qui a été estimé.

12. Procédé destiné à l'estimation de l'usure d'un bandage pneumatique (12) qui supporte un véhicule (10), le procédé comprenant les étapes dans lesquelles :

    on procure au moins un capteur qui est fixé au bandage pneumatique (12) ;
    on génère un premier indicateur (52, 102) à partir dudit au moins un capteur ;
    on procure au moins un élément qui est choisi parmi une table de référence et une base de données qui met en mémoire des données ;
    on génère un deuxième indicateur (52, 102) à partir dudit au moins un élément qui est choisi parmi une table de référence et une base de données qui met en mémoire des données ; dans lequel un des indicateurs englobe au moins un effet (54) du véhicule ;
    on entre les indicateurs (52, 102) dans un modèle ;
    on génère un taux d'usure (60) qui a été estimé pour le bandage pneumatique (12) avec le modèle ; et
    on communique le taux d'usure (60) qui a été estimé à un système de commande du véhicule ;
    **caractérisé en ce que** le procédé comprend en outre le fait de procurer un indicateur supplémentaire (52, 102) qui englobe au moins un élément qui est choisi parmi la rigueur de la route (64) et la rudesse du conducteur (66), ou un indicateur supplémentaire (52, 102) qui englobe au moins un élément qui est choisi parmi une identification (82) d'un composé pour ledit au moins un bandage pneumatique (12) et une identification (84) de la structure de la bande de roulement pour ledit au moins un bandage pneumatique (12).

13. Procédé destiné à l'estimation de l'usure d'un bandage pneumatique selon la revendication 12, qui comprend en outre le fait de détecter une mesure en temps réel d'un état physique du bandage pneumatique (12) et le fait d'intégrer le taux d'usure (60) qui a été estimé à l'état physique qui a été détecté.

FIG. 1

FIG. 2

58

58c

RWD

- NSLF
- NSRF
- DNLR
- DNRR

58

58b

AWD

- DSLF
- DSRF
- DNLR
- DNRR

58

58a

FWD

- DSLF
- DSRF
- NNLR
- NNRR

50

# FIG. 3

FIG. 4

EP 3 378 679 B1

FIG. 5

Relationship Between Wear Rates and Tire Force Severity

FIG. 6

FIG. 7

Seasonal Impact- Same route, Same Wheel Position

FIG. 8

EP 3 378 679 B1

Tread Cap Effect

Same Wheel Position

Wear [%]

Summer — 80

All Season — 80

Winter — 80

Tread Compound — 82

FIG. 9

EP 3 378 679 B1

FIG. 10

FIG. 11

EP 3 378 679 B1

Algorithm 1: BIG DATA Statistical <u>Wear Rate</u> Model

Wear Rate= $\int$ Integral of Driving Severity, Tire Effects, Vehicle Effects, Weather Effects

*Long Term Trending*

Algorithm 2: Physical <u>Wear State</u> Model

Wear State= Monitoring Changes in Physical Tire Attributes

*Short Term Estimation*

FIG. 12

EP 3 378 679 B1

FIG. 13

EP 3 378 679 B1

Cloud Implementation of the Algorithm

100

52

116

{ api }

Geo location

Weather Conditions
Road Roughness Index

52

118

Tire Construction Details
& Compound Properties

110

112

112

114

High frequency calculation and feature
extraction on the vehicle (e.g. capturing
acceleration/braking events, estimating tire
braking stiffness)

52,
102

104

120

User Interface

Tire Health

104

10

12

FIG. 14

EP 3 378 679 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2927065 A
- US 2015057877 A
- EP 2813378 A
- US 9873293 B